# EUROPEAN PATENT SPECIFICATION

(11) **EP 3 803 130 B1**
(45) Date of publication and mention of the grant of the patent: **25.10.2023**
(21) Application number: 18731994.2
(22) Date of filing: 08.06.2018
(51) Int. Cl.: F04D 29/58, H02K 9/22, H02K 11/33

(54) **ELECTRIC COOLANT PUMP**
ELEKTRISCHE KÜHLMITTELPUMPE
POMPE ÉLECTRIQUE À FLUIDE CALOPORTEUR

(43) Date of publication of application: 14.04.2021
(73) Proprietor: Pierburg Pump Technology GmbH, 41460 Neuss (DE)
(72) Inventor: LÖKES, Andreas, 47877 Willich (DE); SAUER, Andreas, 41564 Kaarst (DE)
(74) Representative: terpatent Patentanwälte ter Smitten Eberlein-Van Hoof Rütten Daubert
(86) International application number: PCT/EP2018/065164
(87) International publication number: WO 2019/233597

(56) References cited:
- EP-A1- 1 635 065
- WO-A1-2017/220119

## Description

The invention is directed to an electric coolant pump, preferably to an electric coolant pump for a motor vehicle.

A motor vehicle electric coolant pump is typically provided to circulate a coolant of a motor vehicle cooling circuit, primarily for cooling an internal combustion engine of the motor vehicle. To avoid damage of the Internal combustion engine, the electric coolant pump has to be reliable and failsafe. Electric coolant pumps are typically provided with an electronically commutated electric motor with a motor electronics to allow a simple electronic adaption of the pump performance to the present cooling requirements of the engine. However, the motor electronics generates significant heat during motor operation which has to be efficiently dissipated to avoid an overheating of the motor electronics. The overheating of the motor electronics can cause a malfunction or failure of the electric motor and, as a result, of the coolant pump.

An electric coolant pump for a motor vehicle is disclosed, for example, in WO 2017/220119 A1. The coolant pump is provided with a pump housing which defines a pumping chamber and a motor chamber. The pumping chamber is filled with the coolant and comprises a radially inner pump inlet, a radially outer pump outlet and a pump volute extending from the pump inlet to the pump outlet. The motor chamber Is fluidically separated from the pumping chamber by a separation sidewall extending substantially in a radial plane. The coolant pump is provided with an electric motor with a static motor stator, a rotatable motor rotor and a motor electronics for energizing the motor stator. The motor stator and the motor electronics are arranged in the dry motor chamber. The coolant pump comprises a pump wheel which is arranged in the pumping chamber and which is co-rotatably connected with the motor rotor by an axially extending rotor shaft so that the pump wheel is driven by the electric motor.

The motor electronics is arranged axially adjacent to a volute cooling sector of the pump volute. The motor electronics is in thermal contact with the separation sidewall, in particular with a cooling section of the separation sidewall being defined by the volute cooling sector, so that the motor electronics is cooled by the coolant being pumped through the volute cooling sector and flowing along the sidewall cooling section. No additional cooling arrangements are provided for cooling the motor electronics. However, the sidewall cooling section area is relatively small. As a result, at least parts of the motor electronics being located radially further outside with respect to the volute cooling sector cannot be cooled efficiently which can cause a malfunction or even a failure of the electric coolant pump.

EP 1 635 065 A1 also discloses an electric coolant pump with an electric motor and motor electronics placed in a so called cooling section of the axial wall of the volute. This section of the volute wall is used as a heat sink transmitting the heat from the motor electronics to the coolant flowing in the volute.

It is an object of the invention to provide a cost-efficient and reliable electric coolant pump.

This object is achieved with an electric coolant pump with the features of claim 1.

The electric coolant pump according to the invention is provided with a pump housing which defines a pumping chamber and a motor chamber, both being fluidically separated from each other by a separation sidewall extending substantially in a radial plane. The pumping chamber is filled with a coolant during pump operation and comprises a radially inner pump inlet and a radially outer pump outlet. Preferably, the pump inlet substantially extends in an axial motor direction and the pump outlet substantially extends in a radial plane so that the pump inlet extends substantially perpendicular with respect to the pump outlet. The pump inlet and the pump outlet are fluidically connected by a pump volute extending from downstream of the pump inlet to the pump outlet in a radial plane. The flow cross section of the pump volute increases from the pump inlet to the pump outlet to provide an efficient coolant discharge.

The electric coolant pump comprises an electric motor with a static motor stator, a rotatable motor rotor and a motor electronics for energizing the motor stator. The electric components, i.e. the motor electronics and the electromagnetic motor stator, are sensitive to the coolant and, as a result, are arranged in the dry motor chamber. The rotatable motor rotor is magnetically driven by the motor stator. Preferably, the motor rotor is permanent-magnetic so that no wear-prone sliding contacts are required to electromagnetically magnetize the motor rotor. The motor electronics is electrically connected with the motor stator and comprises several power semiconductors for commutating the driving energy of the motor stator. Preferably, the power semiconductors are arranged on a printed circuit board made of a material with a high thermal conductivity.

The electric coolant pump is provided with a pump wheel being co-rotatably connected with the motor rotor so that the pump wheel is driven by the electric motor. The pump wheel can be provided integrally with the motor rotor or, alternatively, can be co-rotatably connected with the motor rotor, for example, by a rotor shaft. The pump wheel is arranged in the pumping chamber for pumping the coolant from the pump inlet through the pump volute to the pump outlet. Preferably, the pump wheel is located in the radial center of the pump volute so that the coolant entering the pumping chamber via the preferably axial pump inlet flows substantially axially against the pump wheel and is accelerated radially outwardly by the rotating pump wheel.

According to the invention, the motor electronics is located axially adjacent to a volute cooling sector of the pump volute. The volute cooling sector defines a sidewall cooling section which axially separates the volute cooling sector from the motor chamber. The sidewall cooling section is cooled by the coolant flowing through the volute cooling sector.

The volute cooling sector is provided with a radial width to axial height ratio higher than 1.5, i.e. the radial width is at least 1.5 times as large as the axial height of the volute cooling sector. As a result, the volute cooling sector defines a relatively large sidewall cooling section area for a specified flowing cross section. This allows positioning the motor electronics within the lateral extent of the sidewall cooling section in a radial plane, i.e. axially adjacent to the separation sidewall within the motor chamber and laterally within the lateral extent of the sidewall cooling section.

The motor electronics is in thermal contact with the sidewall cooling section so that the motor electronics can be efficiently cooled by the coolant being pumped through the pump volute. Preferably, the printed circuit board of the motor electronics is in direct contact with the sidewall cooling section. Alternatively, the printed circuit board can be attached to the sidewall cooling section by a heat conducting element with a high thermal conductivity. In any case, there is no air gap between the motor electronics and the sidewall cooling section. No complex and, a result, expensive and error-prone cooling arrangements are required for cooling the motor electronics. As a result, the electric coolant pump according to the invention allows a reliable cooling of the motor electronics if the pump is running and, as a result, a reliable pump operation.

Preferably, the entire motor electronics is arranged within the lateral extent of the sidewall cooling section and in thermal contact with the sidewall cooling section. Alternatively, at least power semiconductors of the motor electronics, preferably all power semiconductors of the motor electronics, are in thermal contact with the separation sidewall cooling section. Most of the heat generated in the motor electronics during the motor operation is generated by the power semiconductors of the motor electronics. As a result, normally, efficiently dissipating the heat generated by the power semiconductors is sufficient for cooling the motor electronics.

In a preferred embodiment of the invention, the volute cooling sector is provided with a radial width to axial height ratio in a range of 2.0 to 2.2. This allows a large sidewall cooling section area combined with a high pump performance.

Preferably, the volute cooling sector extends over a volute angle of 70° - 90° starting at the pump outlet so that the volute cooling sector is located close to the pump outlet. This allows an especially large sidewall cooling section area, because the flow cross section of the pump volute and, as a result, the sidewall cooling section area being defined by the cooling sector increases from the pump inlet to the pump outlet. Preferably, outside of the cooling sector, a substantial region of the pump volute is provided with a radial width to axial height ratio less than 1.5, for example, to reduce the radial extent of the pump.

In a preferred embodiment of the invention, at least the cooling section of the separation sidewall is made of a material with a high thermal conductivity, for example made of aluminum. Preferably, the thermal conductivity of the sidewall cooling section material is higher than 10 W/(m·K), but at least, the thermal conductivity is higher than that of plastic materials. This allows an efficient heat transfer from the motor electronics via the sidewall cooling section into the coolant and, as a result, an efficient cooling of the motor electronics.

Preferably, all stator coils of the motor stator are in thermal contact with the separation sidewall so that the at least one stator coil is cooled by the coolant pumped through the coolant pump. This allows a compact and reliable coolant pump not requiring any additional cooling means for cooling the stator coil. Besides the motor electronics, the stator coil is another significant heat source which has to be cooled sufficiently to avoid a malfunction or failure of the electric motor.

In a preferred embodiment of the invention, the motor rotor is arranged in a rotor chamber being fluidically separated from the motor chamber by a separation can. The separation can extends through the air gap between the motor rotor and the motor stator and is made of a material which is permeable for the magnetic field generated by the motor stator. Since the rotor chamber is fluidically separated from the motor chamber, the rotor chamber does not have to be sealed against the pumping chamber. This allows a simple co-rotatable connection of the motor rotor with the pump wheel not requiring any complex sealing elements which are expensive and liable to wear.

Preferably, the motor stator comprises a single stator coil being positioned diametrically opposite to the motor electronics. As a result, the motor stator extends substantially in a single lateral direction so that free space is available close to the motor rotor at the diametrically opposite rotor side. This allows positioning the motor electronics very close to the motor rotor and, as a result, allows a compact electric fluid pump with an efficient cooling of the motor electronics.

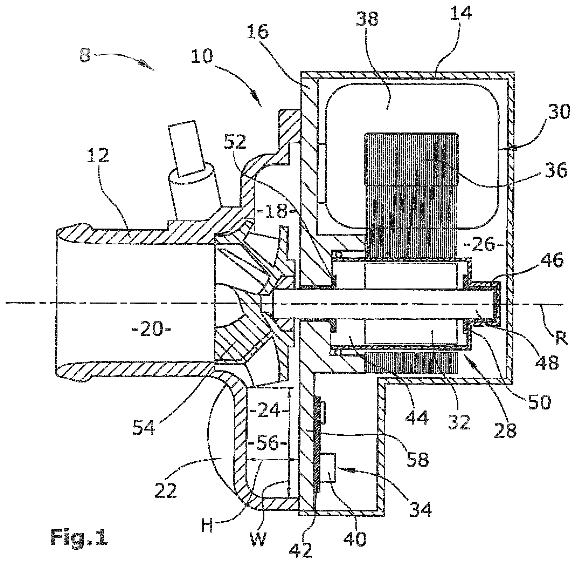

An embodiment of the invention is described with reference to the enclosed drawings, wherein
figure 1 shows a schematic sectional side view of an electric coolant pump according to the invention and

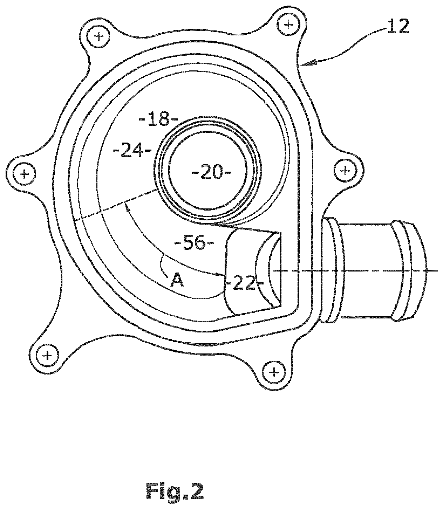

figure 2 shows a schematic top view of a pumping chamber cover of the coolant pump of figure 1.

The electric coolant pump 8 comprises a multi-part pump housing 10 with a pumping chamber cover element 12, a motor chamber cover element 14 and a separation sidewall 16 substantially extending in a radial plane. In the present embodiment of the invention, the separation sidewall 16 is made of a material with a high thermal conductivity, for example made of aluminum. The pumping chamber cover element 12 and the separation sidewall 16 define a pumping chamber 18 being filled with a coolant during pump operation. The pumping chamber 18 comprises a radially inner pump inlet 20, a radially outer pump outlet 22 and a pump volute 24 extending from the pump inlet 20 to the pump outlet 22 in a radial plane. The pump inlet 20 extends substantially in an axial motor direction and the pump outlet 22 extends substantially in a radial plane so that the pump inlet 20 is arranged substantially perpendicular with respect to the pump outlet 22. The flow cross section of the pump volute 24, substantially defined by the product of its radial width W and its axial height H, increases from the pump inlet 20 to the pump outlet 22. The motor chamber cover element 14 and the separation sidewall 16 define a motor chamber 26 being fluidically separated from the pumping chamber 18 by the separation sidewall 16.

The coolant pump 8 comprises an electric motor 28 with a static electromagnetic motor stator 30, a rotatable permanent-magnetic motor rotor 32 and a motor electronics 34. The motor stator 30 is provided with a laminated stator body 36 and with an electromagnetic stator coil 38 being electrically connected with and energized by the motor electronics 34. The motor stator 30 and the motor electronics 34 are located in the dry motor chamber 26. The motor electronics 34 comprises several power semiconductors 40 being arranged on a printed circuit board 42. The motor rotor 32 is located in a rotor chamber 44 being fluidically separated from the motor chamber 26 by a separation can 46. The motor rotor 32 is co-rotatably fixed to a rotor shaft 48 being rotatable about an axis of rotation R. The rotor shaft 48 is rotatably supported in the separation can 46 and in the separation sidewall 16 by two suitable shaft bearings 50,52. The rotor shaft 48 axially extends from the rotor chamber 44 into the pumping chamber 18.

The coolant pump 8 comprises a pump wheel 54 being located in the pumping chamber 18 for pumping the coolant from the pump inlet 20 through the pump volute 24 to the pump outlet 22. The pump wheel 54 is co-rotatably connected with the rotor shaft 48 so that the pump wheel 54 is driven by the electric motor 28. The pump wheel 54 is arranged within the pumping chamber 18 in such a way that the coolant entering the pumping chamber 18 via the pump inlet 20 flows substantially axially against the pump wheel 54 and is accelerated radially outwardly by the rotating pump wheel 54.

The motor electronics 34 is located axially adjacent to a volute cooling sector 56 of the pump volute 18. The volute cooling sector 56 extends over a volute angle A starting at the pump outlet 22 and running in a pump-inlet-facing circumferential direction of the pump volute 18. In the present embodiment of the invention, the volute cooling sector 56 extends over a volute angle A of 80°. The volute cooling sector 56 defines a sidewall cooling section 58 which axially limits the volute cooling sector 56 towards the motor chamber 26. The sidewall cooling section 58 is cooled by the coolant flowing through the volute cooling sector 56. The volute cooling sector 56 is provided with a radial width W to axial height H ratio higher than 1.5, i.e. the radial width W is at least 1.5 times as large as the axial height H of the volute cooling sector 56. In the present embodiment of the invention, the radial width W to axial height H ratio is in a range of 2.0 to 2.2.

The motor electronics 34 is laterally positioned within the lateral extent of the sidewall cooling section 58 and diametrically opposite to the stator coil 38. The printed circuit board 42 of the motor electronics 34 is in direct thermal contact with the separation sidewall cooling section 58. As a result, the motor electronics 34, in particular all power semiconductors 40 of the motor electronics 34, are efficiently cooled by the coolant being pumped through the pump volute 18 during pump operation.

### Reference list

- 8: electric coolant pump
- 10: pump housing
- 12: pumping chamber cover element
- 14: motor chamber cover element
- 16: separation sidewall
- 18: pumping chamber
- 20: pump inlet
- 22: pump outlet
- 24: pump volute
- 26: motor chamber
- 28: electric motor
- 30: motor stator
- 32: motor rotor
- 34: motor electronics
- 36: stator body
- 38: stator coil
- 40: power semiconductors
- 42: printed circuit board
- 44: rotor chamber
- 46: separation can
- 48: rotor shaft
- 50: shaft bearing
- 52: shaft bearing
- 54: pump wheel
- 56: volute cooling sector
- 58: sidewall cooling section
- A: volute angle
- H: axial height
- R: axis of rotation
- W: radial width

## Claims

1. Electric coolant pump (8) comprising
a pump housing (10) defining
a pumping chamber (18) being filled with a coolant during pump operation, with
a radially inner pump inlet (20),
a radially outer pump outlet (22) and
a pump volute (24) extending from downstream of the pump inlet (20) to the pump outlet (22), and
a motor chamber (26) being fluidically separated from the pumping chamber (18) by a separation sidewall (16) extending substantially in a radial plane,
an electric motor (28) with
a static motor stator (30) being arranged in the motor chamber (26),
a rotatable motor rotor (32) and
a motor electronics (34) being arranged in the motor chamber (26) for energizing the motor stator (30), and
a pump wheel (54) being arranged in the pumping chamber (18) and being co-rotatably connected with the motor rotor (32),
wherein the motor electronics (34) is arranged axially adjacent to a volute cooling sector (56) of the pump volute (24) and in thermal contact with a cooling section (58) of the separation sidewall (16) being defined by the volute cooling sector (56) and
**characterized in that**
the volute cooling sector (56) of the pump volute (24) is provided with a radial width (W) to axial height (H) ratio higher than 1.5.

2. Electric coolant pump (8) according to claim 1, wherein power semiconductors (40) of the motor electronics (34), preferably all power semiconductors (40) of the motor electronics (34), are in thermal contact with the separation sidewall cooling section (58).

3. Electric coolant pump (8) according to any preceding claim, wherein the volute cooling sector (56) is provided with a radial width (W) to axial height (H) ratio in a range of 2.0 to 2.2.

4. Electric coolant pump (8) according to any preceding claim, wherein the volute cooling sector (56) extends over a volute angle (A) of 70° - 90° starting at the pump outlet (22).

5. Electric coolant pump (8) according to any preceding claim, wherein the separation sidewall cooling section (58) is made of a material with a high thermal conductivity.

6. Electric coolant pump (8) according to any preceding claim, wherein all stator coils (38) of the motor stator (30) are in thermal contact with the separation sidewall (16).

7. Electric coolant pump (8) according to any preceding claim, wherein the motor rotor (32) is arranged in a rotor chamber (44) being fluldically separated from the motor chamber (26) by a separation can (46).

8. Electric coolant pump (8) according to any preceding claim, wherein the motor stator (30) comprises a single stator coil (38) being positioned diametrically opposite to the motor electronics (34).

## Patentansprüche

1. Elektrische Kühlmittelpumpe (8), umfassend
ein Pumpengehäuse, definierend
eine Pumpkammer (18), die während eines Pumpbetriebs mit einem Kühlmittel gefüllt ist, mit
einem radial inneren Pumpeneinlass (20),
einem radial äußeren Pumpenauslass (22) und
einer Pumpenspirale (24), die sich von stromabwärts des Pumpeneinlasses (20) bis zu dem Pumpenauslass (22) erstreckt, und
eine Motorkammer (26), die von der Pumpkammer (18) durch eine sich im Wesentlichen in einer radialen Ebene erstreckende Trennseitenwand (16) fluidisch getrennt ist,
einen Elektromotor (28) mit
einem feststehenden Motorstator (30), der in der Motorkammer (26) angeordnet ist,
einem drehbaren Motorrotor (32) und
eine Motorelektronik (34) zur Bestromung des Motorstators (30), die in der Motorkammer (26) angeordnet ist, und
ein Pumpenrad (54), das in der Pumpkammer (18) angeordnet ist und mit dem Motorrotor (32) drehfest verbunden ist,
wobei die Motorelektronik (34) axial benachbart zu einem Spiralenkühlsektor (56) der Pumpenspirale (24) und in thermischem Kontakt mit einem Kühlabschnitt (58) der Trennseitenwand (16), der durch den Spiralenkühlsektor (56) definiert ist, angeordnet ist und
**dadurch gekennzeichnet, dass**
der Spiralenkühlsektor (56) der Pumpenspirale (24) ein Verhältnis von radialer Breite (W) zu axialer Höhe (H) von mehr als 1,5 aufweist.

2. Elektrische Kühlmittelpumpe (8) nach Anspruch 1, wobei Leistungshalbleiter (40) der Motorelektronik (34), vorzugsweise alle Leistungshalbleiter (40) der Motorelektronik (34), in thermischem Kontakt mit dem Trennseitenwandkühlabschnitt (58) stehen.

3. Elektrische Kühlmittelpumpe (8) nach einem der vorhergehenden Ansprüche, wobei der Spiralenkühlsektor (56) ein Verhältnis von radialer Breite (W) zu axialer Höhe (H) in einem Bereich von 2,0 bis 2,2 aufweist.

4. Elektrische Kühlmittelpumpe (8) nach einem der vorhergehenden Ansprüche, wobei sich der Spiralenkühlsektor (56) ausgehend von dem Pumpenauslass (22) über einen Spiralenwinkel (A) von 70° - 90° erstreckt.

5. Elektrische Kühlmittelpumpe (8) nach einem der vorhergehenden Ansprüche, wobei der Trennseitenwandkühlabschnitt (58) aus einem Material mit einer hohen Wärmeleitfähigkeit hergestellt ist.

6. Elektrische Kühlmittelpumpe (8) nach einem der vorhergehenden Ansprüche, wobei alle Statorspulen (38) des Motorstators (30) in thermischem Kontakt mit der Trennseitenwand (16) stehen.

7. Elektrische Kühlmittelpumpe (8) nach einem der vorhergehenden Ansprüche, wobei der Motorrotor (32) in einer Rotorkammer (44) angeordnet ist, die von der Motorkammer (26) durch einen Spalttopf (46) fluidisch getrennt ist.

8. Elektrische Kühlmittelpumpe (8) nach einem der vorhergehenden Ansprüche, wobei der Motorstator (30) eine einzige Statorspule (38) umfasst, die diametral gegenüberliegend zu der Motorelektronik (34) positioniert ist.

## Revendications

1. Pompe électrique à réfrigérant (8) comprenant
un boîtier de pompe (10) définissant
une chambre de pompage (18) remplie de réfrigérant pendant le fonctionnement de la pompe, avec
une entrée de pompe intérieure radialement (20),
une sortie de pompe extérieure radialement (22) et
une volute de pompe (24) s'étendant de l'aval de l'entrée de pompe (20) à la sortie de pompe (22), et
une chambre de moteur (26) étant séparée fluidiquement de la chambre de pompage (18) par une paroi latérale de séparation (16) s'étendant substantiellement dans un plan radial,
un moteur électrique (28) comportant
un stator stationnaire de moteur (30) étant arrangé dans la chambre de moteur (26),
un rotor rotatif de moteur (32) et
une électronique de moteur (34) étant arrangée dans la chambre de moteur (26) pour énergiser le stator de moteur (30), et
une roue de pompe (54) est arrangée dans la chambre de pompage (18) et est connectée de manière rotative au rotor de moteur (32),
dans lequel l'électronique du moteur (34) est arrangée axialement à côté d'un secteur de refroidissement de la volute (56) de la volute de pompe (24) et en contact thermique avec une section de refroidissement (58) de la paroi latérale de séparation (16) définie par le secteur de refroidissement de la volute (56) et
**caractérisé en ce que**
le secteur de refroidissement de la volute (56) de la volute de pompe (24) est fourni avec un ratio largeur radiale (W) sur hauteur axiale (H) supérieur à 1,5.

2. Pompe électrique à réfrigérant (8) selon la revendication 1, dans laquelle des semi-conducteurs de performance (40) de l'électronique du moteur (34), préférablement tous les semi-conducteurs de performance (40) de l'électronique du moteur (34), sont en contact thermique avec le section de refroidissement de la paroi latérale de séparation (58).

3. Pompe électrique de réfrigérant (8) selon l'une des revendications précédentes, dans laquelle le secteur de refroidissement de la volute (56) est pourvu d'un ratio largeur radiale (W) sur hauteur axiale (H) compris dans une zone allant de 2,0 à 2,2.

4. Pompe électrique de réfrigérant (8) selon l'une des revendications précédentes, dans laquelle le secteur de refroidissement de la volute (56) s'étend sur un angle de volute (A) de 70° à 90° à partir de la sortie de pompe (22).

5. Pompe électrique à liquide réfrigérant (8) selon l'une des revendications précédentes, dans laquelle le secteur de refroidissement de la paroi latérale de séparation (58) est constitué d'un matériau ayant une conductivité thermique élevée.

6. Pompe électrique à liquide réfrigérant (8) selon l'une des revendications précédentes, dans laquelle toutes des bobines de stator (38) du stator du moteur (30) sont en contact thermique avec la paroi latérale de séparation (16).

7. Pompe électrique de réfrigérant (8) selon l'une des revendications précédentes, dans laquelle le rotor de moteur (32) est arrangé dans une chambre de rotor (44) étant séparée fluidiquement de la chambre de moteur (26) par une boîte de séparation (46).

8. Pompe électrique à réfrigérant (8) selon l'une des revendications précédentes, dans laquelle le stator de moteur (30) comprend une seule bobine de stator (38) étant positionnée diamétralement opposée à l'électronique de moteur (34).
